Europäisches Patentamt

(19) European Patent Office

Office européen des brevets

(11) Publication number: **0 277 809 B1**

(12) **EUROPEAN PATENT SPECIFICATION**

(45) Date of publication of patent specification:
23.10.91 Bulletin 91/43

(21) Application number: **88300871.6**

(22) Date of filing: **02.02.88**

(51) Int. Cl.⁵: **G11B 23/03, G11B 23/033**

(54) **Disc cartridges.**

(30) Priority: **02.02.87 JP 12875/87**

(43) Date of publication of application:
**10.08.88 Bulletin 88/32**

(45) Publication of the grant of the patent:
**23.10.91 Bulletin 91/43**

(84) Designated Contracting States:
**AT DE FR GB NL**

(56) References cited:
EP-A- 0 186 195
EP-A- 0 192 188
EP-A- 0 230 963
CH-A- 649 404
US-A- 4 695 910

(73) Proprietor: **SONY CORPORATION**
**7-35 Kitashinagawa 6-Chome Shinagawa-ku**
**Tokyo 141 (JP)**

(72) Inventor: **Sakaguchi, Kiyonori**
**c/o Daiichi Kasei Co. Ltd. 4-6-19,**
**Omochanomachi**
**Mibumachi Shimotsugagun Tochigi (JP)**
Inventor: **Takaiwa, Makio**
**c/o Daiichi Kasei Co. Ltd. 4-6-19,**
**Omochanomachi**
**Mibumachi Shimotsugagun Tochigi (JP)**
Inventor: **Suzuki, Akira c/o Patent Division**
**Sony Corporation 6-7-35, Kitashinagawa**
**Shinagawa-ku Tokyo 141 (JP)**

(74) Representative: **Pilch, Adam John Michael et**
**al**
**D. YOUNG & CO. 10 Staple Inn**
**London WC1V 7RD (GB)**

EP 0 277 809 B1

# Description

This invention relates to disc cartridges for retaining discs which are disc-shaped recording media on which predetermined information signals can be recorded.

A previously-proposed disc cartridge is arranged so as to retain therein a disc-shaped recording medium (such as a so-called compact disc) in such a fashion that the recording medium can be reproduced in the cartridge. This type of disc cartridge is arranged to co-operate with appropriate recording and/or reproducing apparatus with the disc accommdated therein so that information signals can be written or recorded on and read from the disc. One disc cartridge half is provided with an opening through which the signal recording surface of the disc is exposed to the exterior of the cartridge, and which is arranged to be confronted by a recording and/or reproducing pickup device; another opening is also provided in the cartridge into which a disc table of the disc drive unit can be inserted so as to drive the disc rotatably. The disc cartridge half is provided with a clamp unit in a facing relationship with respect to the opening into which the disc table is inserted so that the clamp unit can clamp the disc to the disc table in co-operation with the disc table. The clamp unit is arranged to clamp the disc under the force of magnetic attraction of a magnet provided on the disc table, and includes a clamper of synthetic material rotatably mounted to the inner lateral side of the disc cartridge half, with a magnetic plate secured to the clamper.

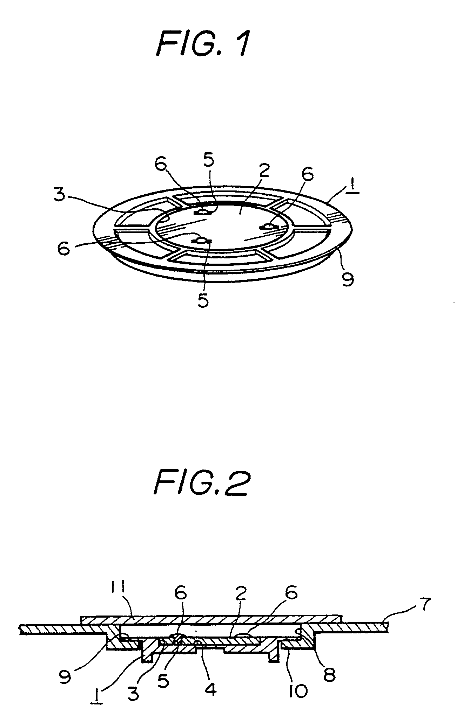

Such a disc cartridge is disclosed, for example, in EP-A 0260898 published on 23 March 1988 after the application date of this application and has a clamp unit as shown in Figures 1 and 2 of the accompanying drawings.

The clamp unit shown in Figures 1 and 2 includes a clamper 1 formed of synthetic material and a magnetic plate 2, such as an iron plate, attached to one major surface of the clamper 1. The clamper 1 is substantially of disc form and has a recess 3 at its centre for accommodating the magnetic plate 2. On a bottom wall section 4 of the recess 3, there are formed three projections 6 for engaging in three through-holes 5 formed in the magnetic plate 2. The magnetic plate 2 is integrally attached to the clamper 1 with the projections 6 engaged in the through-holes 5 and with the projections fused such as by application of ultrasonic waves. The clamper 1 having the magnetic plate 2 attached thereto is rotatably mounted to a disc cartridge half 7, as shown in Figure 2. This half 7 is provided with a clamper attachment opening 8 into which the clamper 1 is introduced. The peripheral edge of the attachment opening 8 towards the inside of the disc cartridge is formed with a retaining lug 10 directed towards the inside of the clamper attachment opening 8 for retaining a ring-like flange 9 projectingly formed on the outer periphery of the clamper 1. The clamper 1 is introduced into the attachment opening 8 with the flange 9 retained by the lug 10. The clamper 1 is prevented from being extricated from the attachment opening 8 by a cover plate 11 attached to the outer lateral surface of the half 7 for closing the attachment opening 8. The clamper 1 is attached to the half 7 so as to be freely rotatable within the gap between the cover plate 11 and the lug 10.

In the above-described clamper system, an ultrasonic welding process is required, in which the retaining lug 10 is fused so as to secure the magnetic plate 2 to the clamper 1 formed of synthetic material. Thus a mechanical system such as an ultrasonic welder is required, including a complicated assembling process step. In addition, considerable investment costs are required for the mechanical system which results in increased production costs.

EP-A-0230963, which was not published until after the priority date of this application, discloses an optical disc clamping arrangement wherein a magnetic member of disc shape is received in a recess in a centering member and secured therein by L-shaped claws pressed downwardly out of the face of the magnetic member, projecting into apertures in the centering member and engaged beneath engaging projections in the apertures. EP-A-0186195 (used when delimiting claim 1) discloses an annular member of magnetic material received in an annular recess in a thermoplastics clamper member and bonded thereto.

According to the invention there is provided a disc cartridge comprising a clamper of synthetic material mounted for rotation to a disc cartridge half and a magnetic plate accommodated in a recess of the clamper and secured thereto, the peripheral wall of the recess being contoured to conform to the outer shape of the magnetic plate, characterised in that a plurality of projections are formed on the magnetic plate, and a plurality of hook means are formed along the peripheral wall of the recess, the projections on the magnetic plate being respectively engaged with the hook means to secure the magnetic plate to the clamper.

A preferred embodiment of the present invention, to be described in greater detail hereinafter, provides a disc cartridge in which a clamping system is provided for clamping the disc to the disc table by the force of magnetic attraction, the cartridge including a magnetic plate which can be easily attached to the clamper of synthetic material, without the need to use an ultrasonic welding process.

The preferred disc cartridge can be of reduced thickness compared to the previous proposal, and includes a clamping unit capable of being sufficiently attracted by the disc table magnet.

The invention will now be described by way of example with reference to the accompanying drawings, throughout which like parts are referred to by like references, and in which :

Figure 1 is a perspective view showing a magnetic plate and a clamper constituting a clamp unit of a previously-proposed disc cartridge ;

Figure 2 is a sectional view showing the clamp unit of the disc cartridge shown in Figure 1 ;

Figure 3 is a perspective view showing a disc cartridge according to an embodiment of the present invention, with an upper half thereof being shown open ;

Figure 4 is a partly exploded perspective view showing the rear side of the disc cartridge shown in Figure 3 ;

Figure 5 is an exploded perspective view showing the clamper and the magnetic plate of the disc cartridge shown in Figures 3 and 4 ;

Figure 6 is a sectional view taken along a line VI-VI of Figure 5 ;

Figure 7 is a sectional view showing a hook piece provided for the clamper in the cartridge of Figures 3 to 6 ;

Figure 8 is a plan view showing the clamper and the magnetic plate when assembled together ;

Figure 9 is a sectional view showing the clamper when attached to the upper half of the disc cartridge ;

Figure 10 is a plan view showing the main portion of a mechanism provided in a recording and/or reproducing apparatus for receiving a disc cartridge as shown in Figures 3 to 9, including a shutter when moved towards the left ;

Figure 11 is a plan view similar to Figure 10, but showing the shutter when moved towards the right ; and

Figure 12 is a sectional view showing the disc cartridge embodying the present invention, with its disc clamped on to the disc table.

One embodiment of the invention will now be described, in which a disc cartridge holds therein a disc-shaped recording medium (hereinafter referred to simply as a disc) whose shape and size is, for example, that of a so-called compact disc (CD). It is to be noted that discs held in disc cartridges embodying the present invention are not limited to the compact disc format, but may be in accordance with various other recording medium types in disc form.

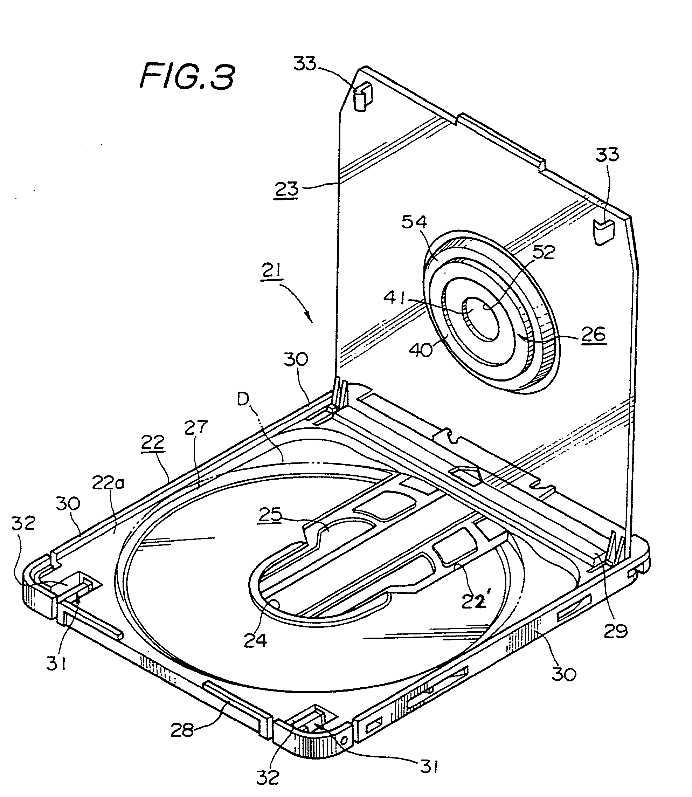

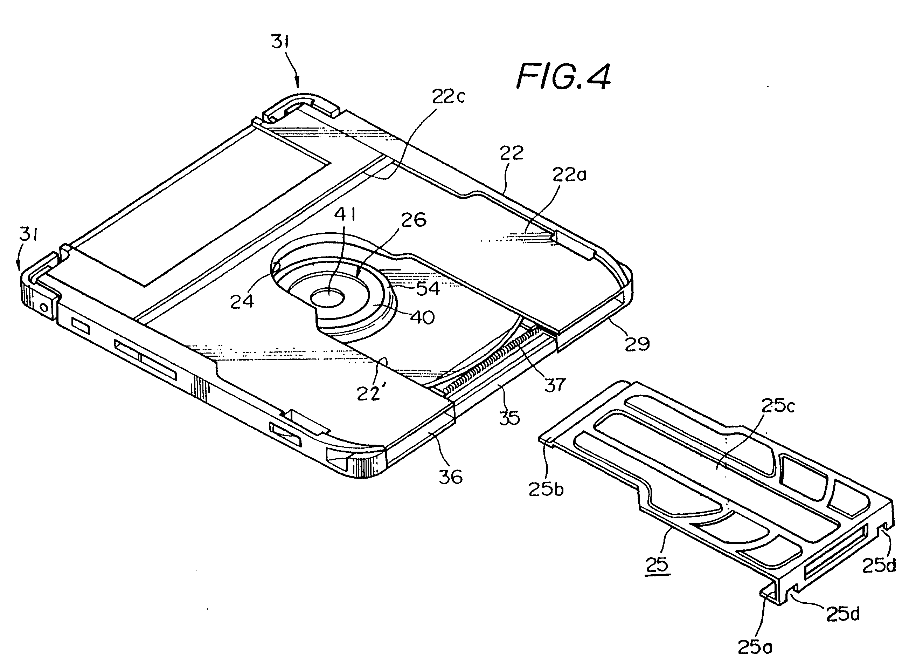

Figures 3 and 4 illustrate one embodiment of disc cartridge, in which Figure 3 is a perspective view illustrating the disc cartridge when opened and Figure 4 is a partly exploded perspective view showing the rear side of the disc cartridge.

As shown in Figures 3 and 4, a disc cartridge 21 comprises a lower half 22 constituting a housing main body, an upper half 23 used as a lid mounted to the lower half 22 such that it can be opened and closed, a shutter 25 slidably mounted to the lower half 22 such that it can open and close an opening 22′ formed in the lower half 22 so as to confront the signal recording surface of a disc D to the outside of the disc cartridge 21 and specifically to confront a recording and/or reproducing pickup device (not shown), an opening 24 through which a disc table of a disc drive device (not shown) for rotationally driving the disc D can be inserted, and a clamp unit 26 rotatably mounted at a position on the inner lateral side of the upper half 23 facing the opening 24.

On the lower half 22, which is preferably a solid rectangular plate formed of synthetic material, there is formed a circular concave disc holder portion 27 for holding therein the disc D at the centre of a major surface 22a thereof. At the centre of the disc holder portion 27, there is formed the aforementioned opening 24 into which the disc table is inserted, while the second opening 22′ for the pickup device is formed in the disc holder portion 27 extending towards the rear in continuation with the opening 24.

A front wall section 28 is formed on the front end edge of the major surface 22a of the lower half 22, while a rear wall section 29 and two side wall sections 30 are respectively formed on the rear end edge and on the right and left side edges of the major surface 22a. Two locking means 31 for locking the upper half 23 are formed on each of the front corner portions of the major surface 22a. A cut-away concave portion 32 is formed near each of the front corner portions of the major surface 22a adjacent the locking means 31, each cut-away portion 32 extending forwards.

The upper half 23 is pivotally mounted to the rear wall section 29, the upper half 23 being rectangular and corresponding in shape to the major surface 22a of the lower half 22. The upper half 23 is preferably formed of moulded synthetic material and is arranged to be engaged with the inner surface sides of the peripheral wall sections 28, 29, 30 of the major surface 22a of the lower half 22. Engagement hook portions 33 for engagement with the locking means 31 when the upper half 23 is closed against the lower half 22 project from the inner surface of the front portion of the upper half 23 in the vicinity of both corner portions thereof.

The upper half 23, when connected to the lower half 22 by the hook portions 33 being locked with the locking means 31, may be opened by causing the locking means 31 to be flexed in a direction towards each other to release the locking of the hook portions 33. With the upper half 23 thus opened, the disc D contained in the disc holder portion 27 can be removed and exchanged, as desired.

As shown in Figure 4, the shutter 25 is formed of a thin plate, such as a metal plate, and is arranged to close the opening 22′ (for the pickup device) and the opening 24 (for the disc table) in the lower half 22. The shutter 25 is caused to contact with the rear portion of the major surface 22a of the lower half 22. A rear portion 25a of the shutter 25 is formed with a U-shaped cross-section and is engageable for movement with respect to a sliding member or slider 35 which can be slid along a guide groove 36 formed at the rear surface of the rear wall section 29 in the lateral direction of the major surface 22a. A front portion 25b of the shutter 25 is inserted into as lit 22c formed through the front portion of the rear side of the major surface 22a in the lateral direction, and is slidably movable in the lateral direction for opening and closing the openings 22' and 24. The slider 35 is biased by a spring 37 towards the central position, so that the shutter 25 tends to close the openings 22' and 24. Further, on the rear surface side of the shutter 25, there is formed a concave guide groove 25c which extends in the longitudinal direction of the shutter 25 at its centre and in the lateral direction thereof in a rib-like manner.

A mechanism by which the shutter 25 is returned to the central position at which it closes the opening 22' (for the pickup device)and the opening 24 (for the disc table) will be explained hereafter.

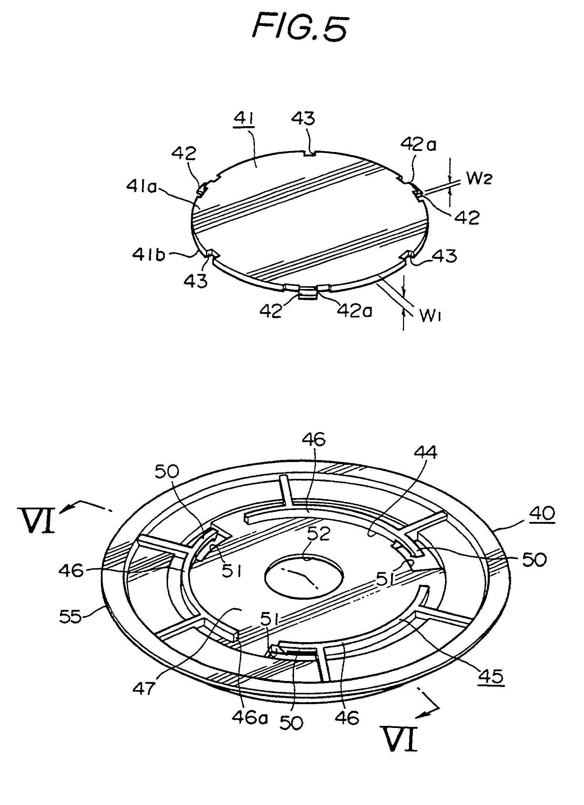

As shown in Figure 5, the clamp unit 26 attached to the upper half 23 is constituted by a clamper 40 formed of synthetic material substantially in a disc shape, and a magnetic plate 41 similarly in a disc shape which is attached to one major surface of the clamper 40.

The magnetic plate 41 is formed, for example, by punching a magnetic metallic or other material into the form of a thin disc. When formed of iron, the magnetic plate 41 may have a thickness W1 about 0.9 to 1.5 mm. On the outer periphery of the magnetic plate 41, a plurality of (herein three) retaining projections 42 are formed at equiangular intervals. The projections 42 are formed by rolling small projecting pieces formed on punching the magnetic plate 41 from a blank. The projections 42 are formed so as to be lesser in thickness than the magnetic plate 41 and typically to have a thickness W2 less than half the thickness W1 of the magnetic plate 41. The projections 42 may therefore be about 0.3 to 0.7 mm in thickness and are formed to have a step 42a with respect to one major surface 41a while being flush with the other major surface 41b of the magnetic plate 41. On the outer periphery of the magnetic plate 41, a plurality of (herein three) engaging grooves 43 are arranged at equiangular intervals so as to be engageable by a tool intended for gripping the plate 41 for manually securing it to the clamper 40. These engaging grooves 43 are formed by partially removing the outer peripheral edge of the magnetic plate 41.

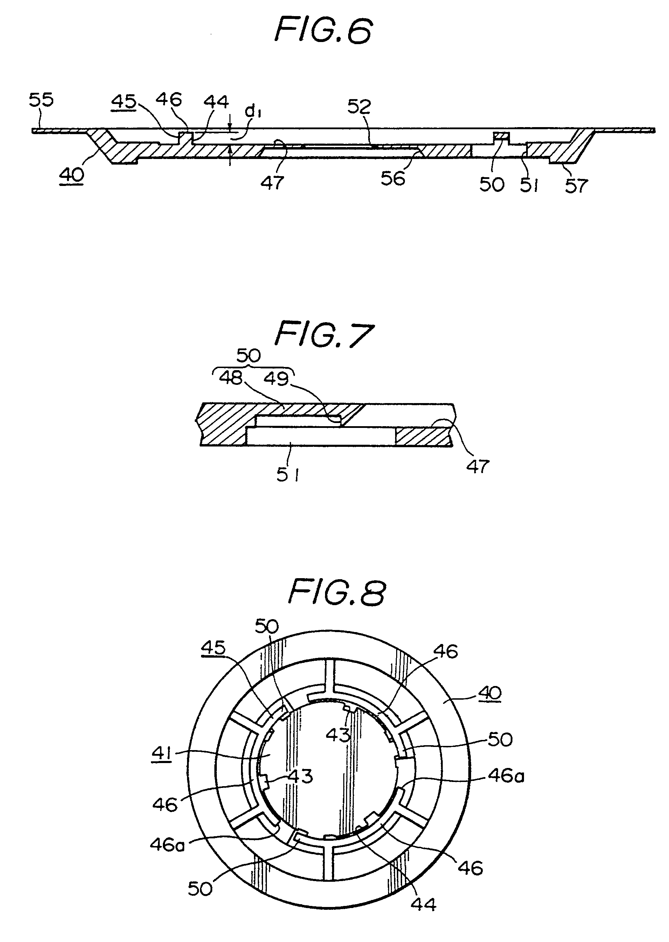

At the centre of one major surface of the clamper 40, there is formed a recess 44 having a peripheral wall 45 for accommodating the magnetic plate 41, in similar manner to that shown in Figure 1. The recess 44 is formed to have a depth D1, the same as or slightly larger than the thickness W1 of the magnetic plate 41. Thus the recess 44 has a depth such that, when the magnetic plate 41 is contained in the recess 44, the magnetic plate 41 does not protrude. The peripheral wall 45 of the recess 44 is formed as a ring corresponding to the disc shape of the magnetic plate 41. The peripheral wall 45 is formed by a plurality of (herein three)peripheral wall sections 46 arranged in a ring-like shape with a predetermined interval between each of the wall sections 46. Each peripheral wall section 46 includes hook means 50 formed of legs 48 formed in the tangential direction of the peripheral wall 45 in parallel with a bottom wall section 47, and hooks 49 projectingly arranged at the ends of the legs 48, such that the legs 48 are spaced from the bottom wall section 47 of the clamper 40 by a predetermined gap sufficient for the retaining projections 42 of the magnetic plate 41 to be engaged therein, as shown in Figures 5 and 7. The hooks 49 are each provided on the side of the leg 48 facing the bottom wall section 47 of the clamper 40. At the position of the bottom wall section 47 of the clamper 40 facing the hook means 50, a cut-out or through-hole 51 is provided to increase the amount of projection of the hook 49 while permitting the hook means 50 to be thrust and deflected resiliently. As shown in Figures 5 and 6, at the centre of the bottom wall section 47 disposed within the recess 44, a through-hole 52 is formed for confronting the magnetic plate 41 provided in the recess 44 to the other major surface of the clamper 40. On the outer periphery on the main surface of the clamper 40, there is projectingly formed a ring-like flange 55 which, when the clamper 40 is disposed within a clamper attachment opening 53 in the cartridge upper half 23, is engaged with a retaining piece 54 protrudingly provided in the inner periphery of the attachment opening 53 to prevent accidental extraction thereof from the opening 53. On the other major surface of the clamper 40, there is projectingly formed in the form of a ring a tapered centring surface 56 for centring the clamper 40 and a magnet holding member provided on the disc table, when the disc D is clamped to the disc table as will later be described, and a disc thrusting and supporting section 57 for thrusting and supporting the disc D on to the disc supporting surface of the disc table.

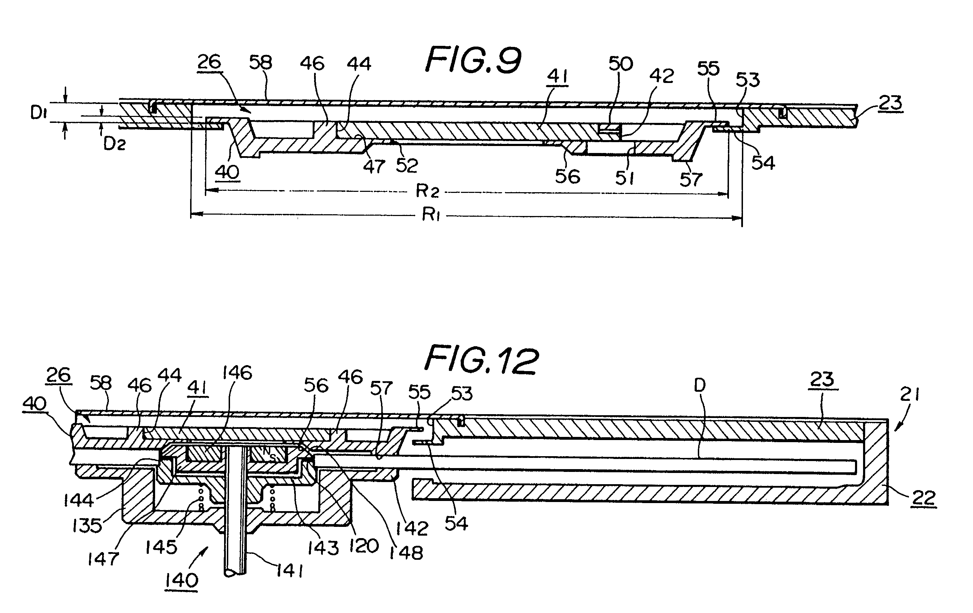

The magnetic plate 41 is secured integrally to the clamper 40 as will now be described. The magnetic plate 41 is fitted and disposed within the recess 44 with the major surface 41b thereof which is formed with the projections 42 resting on the bottom wall section 47 of the clamper 40. At this time, each of the projections 42 confronts a gap 46a between the adjoining peripheral wall sections 46. The magnetic plate 41 is integrally secured to the clamper 40, as shown in Figures 8 and 9, by engaging a tool (not shown) in the engaging grooves 43 in the magnetic plate 41 and turning the plate 41 with the aid of the tool so as to engage the projections in the hooks 49 of the hook means 50. Since the hooks 49 of the hook means 50 project towards the bottom wall section 47 of the clamper 40, the magnetic plate 41, once secured to the clamper 40, will not be disengaged from the clamper 40 during the operation.

As described hereinabove, the clamper 40 with the magnetic plate 41 secured thereto is mounted for rotation to the inner lateral side of the upper half 23 of the disc cartridge 21, as shown in Figures 3 and 9. That is, the clamper 40 is rotatably disposed within the clamper attachment opening 53 formed in the upper half 23 at a position facing the opening 24 (for the disc table) formed in the lower half 22. The retaining piece 54 is projectingly formed on the inner periphery of the clamper attachment opening 53. The clamper 40 is fitted and disposed within the clamper attachment opening 53 with the other major surface thereof formed with the disc thrusting and supporting section 57 directed to the inside of the cartridge 21 and with the flange 55 engaged with the retaining piece 54. With a cover plate 58 closing the clamper attachment opening 53 being attached to the outer lateral surface of the upper half 23, the clamper 40 is attached to the upper half 23 so as to be free from extraction from the attachment opening 53 and to be freely rotatable within the gap between the cover plate 58 and the retaining piece 54. The diameter R1 of the clamper attachment opening 53 is selected to be slightly larger than the outside diameter R2 of the clamper 40, while the depth D1 of the opening 53 is selected to be larger than the thickness D2 of the flange 55 of the clamper 40. Thus when the clamper 40 is coupled to the disc table, the connecting portion thereof with respect to the disc table can be adjusted with correction for movement being made in both the radial and axial directions.

The disc cartridge 21 so far shown and described is mounted to the recording and/or reproducing apparatus (not shown) in the manner hereafter described, whereby the shutter 25 is manipulated so as to be opened to clamp the disc D on the disc table of the disc drive device, to enable disc rotation to take place in unison with the rotation of the disc table.

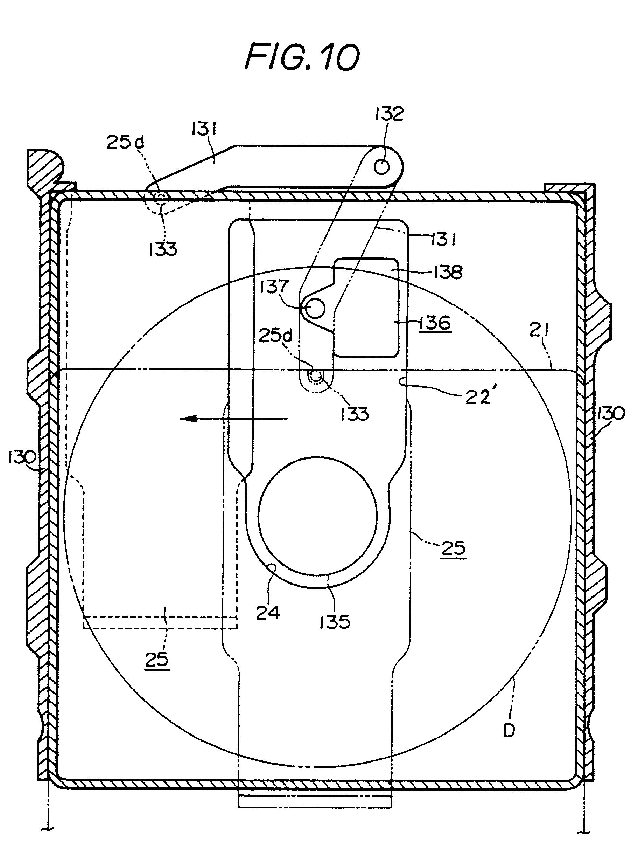

Thus, referring to Figure 10, the recording and/or reproducing apparatus (not shown) to which the disc cartridge 21 is loaded, is provided with a pair of right and left insertion guide members 130. A lever 131 for opening the shutter 25 is provided between the guide members 130. The lever 131 is rotatably supported on the apparatus by a supporting pin 132 and is ordinarily at a position shown by a double-dot chain line in Figure 10. The lever 131 is provided at its free end with a pin 133 engaged with a notch 25d (see also Figure 4) of the shutter 25, so as to open the shutter 25. In this case, two notches 25d may be provided, as shown in Figure 4, on the shutter 25 spaced by a distance in the direction along which the shutter 25 is slidably movable.

With the arrangement described hereinabove, when a pickup device 136 provided with an objective lens drive mechanism 138 placed at the right-hand side relative to an objective lens 137 is utilised as shown in Figure 10, the shutter 25 is moved leftwardly as shown by the broken line in Figure 10. In this case, the supporting pin 132 of the lever 131 has previously been displaced rightwardly relative to the centre.

If the disc cartridge 21 is inserted between the insertion guide members 130 of such apparatus, when the front end of the disc cartridge 21 is inserted as far as the position shown by a double-dot chain line in Figure 10, the notch 25d of the shutter 25 is engaged with the pin 133 at the free end of the lever 131. In this state, if the disc cartridge 21 is further guided inside (upwards in the figure) along the guide members 130, the lever 131 is rotated about the supporting pin 132 in a clockwise direction. Accordingly, the shutter 25 is moved leftwardly by the pin 133 in association with the rotation of the lever 131, whereby the openings 22' (for the pickup device) and 24 (for the disc table) are open as shown in Figure 10. In other words, the shutter 25 completely opens the opening 25 of the disc cartridge 21. As a result, a disc table 135 can be inserted into the disc cartridge 21 through the opening 24. Further, the shutter 25 completely opens the right-hand portion of the opening 22' while covering a part of the left-hand portion of the opening 22'. This provides an opening portion large enough to enable the pickup device 136 (provided at its right-hand side with the objective lens drive mechanism 138) to be moved thereinto.

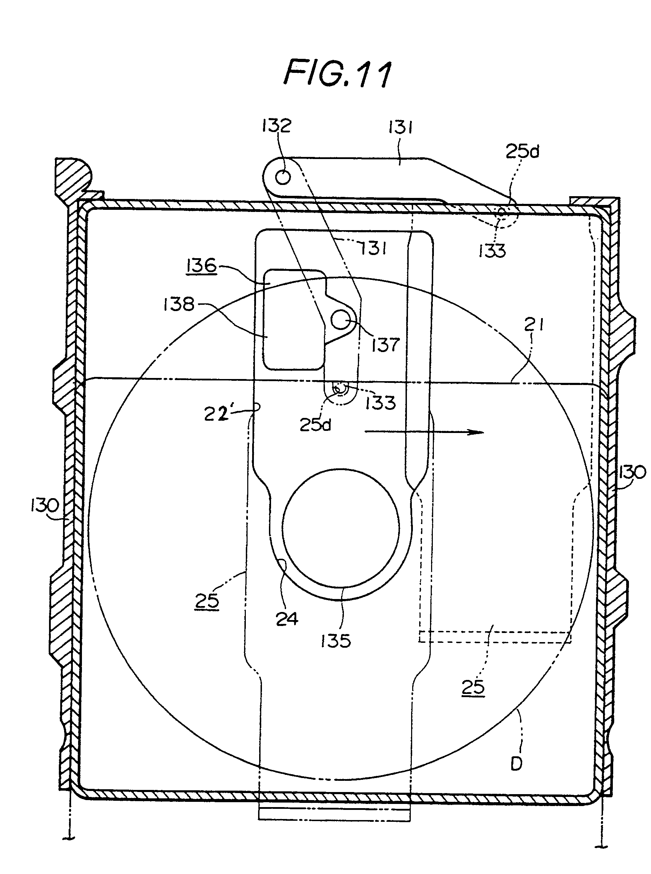

When a pickup device 136 provided with the objective lens driving mechanism 138 at its left-hand side relative to the objective lens 137 is utilised as shown in Figure 11, the supporting pin 132 of the lever 131 is displaced leftwardly as shown in Figure 11. If the disc cartridge 21 is then inserted between the guide members 130, the notch 25d of the shutter 25 and the pin 133 of the lever 131 are engaged with each other at a position shown by a double-dot chain line in Figure 11. If the disc cartridge 21 is further inserted (further moved upwards in the figure), the shutter 25 is moved rightwardly as the lever 131 is rotated in an anti-clockwise direction. As a result, the shutter 25 completely opens the opening 24 (for the disc table) through which the disc table 135 can be inserted, and the left-hand portion of the opening 22' (for the pickup device) while covering apart of the right-hand portion of the opening 22' thus enabling the pickup device 136 to move in the axial direction of the disc D.

Accordingly, if the disc cartridge 21 is unloaded from the recording and/or reproducing apparatus after playback has been terminated, the shutter 25 is returned to the central position by the force of the spring 37 so as to close the openings 22' and 24. According to the mechanism using the spring 37, the shutter 25 which is movable both in rightward and leftward directions can always be returned to the central position by the use of the single spring 37, and placed at the correct position at which the shutter 25 covers the openings 22' and 24.

As described hereinabove, when the disc cartridge 21 is introduced into the recording and/or reproducing apparatus and the shutter 25 is displaced to open the opening 24 for the disc table, so that the disc cartridge 21 is engaged with the recording and/or reproducing apparatus, the disc table 135 can be inserted into the opening 24. The disc D accommodated within the disc cartridge 21 is attached to the disc table 135 and clamped as shown in Figure 12 to the aforementioned clamp unit 26 so as to be integrally connected to the disc table 135.

Referring to Figure 12, a disc drive unit 140, provided in the recording and/or reproducing apparatus and including the disc table 135, is mounted with the disc table 135 being integrally fitted to a centre spindle 141 to which driving power is transmitted from a rotary drive source (not shown) either directly or indirectly through a transmission system (also not shown). The disc table 135 is provided on the outer perimeter thereof with a disc supporting section 142 arranged to support the perimeter of a centre opening 120 of the disc D. On the inner periphery of the disc table 135, there is provided a disc centring member 143 mounted axially and slidably with respect to the centre spindle 141. The disc centring member 143 is provided at the foremost part thereof with a tapered disc centring surface 144 to be fitted to the centre opening 120 of the disc D, and is biased resiliently upwardly by a coil spring 145. When the disc D is attached to the disc table 135, the disc centring member 143 is thrust and biased by the disc D against the bias of the coil spring 145 so as to be engaged in the centre opening 120 and provide centring of the disc D with respect to the centre spindle 141.

On the upper end of the centre spindle 141, there is integrally fitted a magnet holding member 147 holding a permanent magnet 146 for magnetically attracting the magnetic plate 41 secured to the clamper 40. The magnet holding member 147 is attached to the centre spindle 141 to prevent accidental extrication of the disc centring member 143. It is to be noted that the magnet holding member 147 has a lesser diameter than the centre opening 120 of the disc D and is formed at the foremost part thereof with a tapered clamper centring surface 148 engaging the centring surface 56 of the clamper 40 to provide for centring of the clamper 40 with respect to the magnet holding member 147. The magnet 146 held by the magnet holding member 147 is in the form of a ring, and is magnetised along the thickness as shown in Figure 12. The magnet 146 is arranged so as to be embedded within a mating recess 149 formed on the upper surface of the magnet holding member 147.

With the above construction of the disc table 135, the disc D is placed on and attached to the disc supporting section 142 with correct centring with respect to the centre spindle 141 by having the disc centring member 143 fitted into the centre opening 120 of the disc D. When the disc D is mounted to the disc table 135 in this manner, the magnetic plate 41 secured to the clamper 40 is magnetically attracted by the magnet 146 and the centring surface 56 is engaged with the clamper centring surface 148 of the magnet holding member 147 so that the clamper 40 is attracted on to the disc table 135 with correct centring to the magnet holding member 147. The clamper 40 can be rotated in unison with the disc table 135 with the disc thrusting and supporting section 57 thrusting the perimeter of the centre opening 120 of the disc D to pressure the disc fixedly to the disc table 135 and to clamp the disc D in co-operation with the disc table 135.

When the disc D is clamped in the above manner, the clamper 40 can float within the clamper attachment opening 53 so that a state of free revolution is provided without the flange 55 contacting the retaining piece 54.

The magnetic plate 41 in the above-described disc cartridge 21 can be secured by simply engaging the retaining projections 42 with the clamper 40, so that the attachment operation may be facilitated and there is no need to utilise ultrasonic welding. Also, since each projection 42 has a thickness less than that of the magnetic plate 41, the recess 44 for accommodating the magnetic plate 41 can have a depth just sufficient to accommodate the magnetic plate 41. The hook means 50 engaging the projections 42 can be formed in a portion of the peripheral wall 45 of the recess 44, so that reduction in thickness of the disc cartridge 21 can be achieved.

## Claims

1. A disc cartridge (21) comprising a clamper (40) of synthetic material mounted for rotation to a disc cartridge half (23) and a magnetic plate (41) accommodated in a recess (44) of the clamper (40) and secured thereto, the peripheral wall (45) of the recess (44) being contoured to conform to the outer shape of the magnetic plate (41), characterised in that a plurality of projections (42) are formed on the magnetic plate (41), and a plurality of hook means (50) are formed along the said peripheral wall (45) of the recess (44), the projections (42) on the magnetic plate (41) being respectively engaged with the hook means (50) to secure the magnetic plate (41) to the clamper (40).

2. A disc cartridge according to claim 1, wherein the peripheral wall (45) of the recess (44) is composed of a plurality of peripheral wall sections (46) separated by a predetermined distance from each other, the wall sections (46) each including a hook (49) and a leg (48) separated by a predetermined distance from a bottom wall section (47) of the clamper (40), the leg (48) being substantially parallel to the bottom wall section (47) and extending tangentially of the peripheral wall (45).

3. A disc cartridge according to claim 1 or claim 2, wherein each projection (42) has a thickness less than that of the magnetic plate (41).

4. A disc cartridge according to claim 3, wherein each projection (42) has a thickness not more than half that of the magnetic plate (41).

5. A disc cartridge according to anyone of the preceding claims, wherein the magnetic plate (41) includes a groove (43) into which a tool for an attachment operation can be engaged.

6. A disc cartridge according to claim 5, wherein, facing each hook means (50), an opening (51) is provided in the bottom wall section (47) of the clamper (40).

7. A disc cartridge (21) according to anyone of the preceding claims, wherein the magnetic plate (41) has a disc-like shape.

**Patentansprüche**

1. Plattenkassette (21) mit einer Klemmvorrichtung (40) aus einem synthetischen Material, die zur Drehung an einer Plattenkassettenhälfte (23) angebracht ist, und einer Magnetplatte (41), die in einer Ausnehmung (44) der Klemmvorrichtung (40) untergebracht und an dieser befestigt ist, wobei die Umfangswandung (45) der Ausnehmung (44) formmäßig so ausgebildet ist, daß sie sich an die äußere Form der Magnetplatte (41) anpaßt, dadurch **gekennzeichnet**, daß eine Vielzahl von Vorsprüngen (42) auf der Magnetplatte (41) ausgebildet sind und daß eine Vielzahl von Haken (50) längs der Umfangswandung (45) der Ausnehmung (44) ausgebildet sind, wobei die Vorsprünge (42) auf der Magnetplatte (41) jeweils in Eingriff mit den Haken (50) stehen, um die Magnetplatte (41) an der Klemmvorrichtung (40) zu befestigen.

2. Plattenkassette nach Anspruch 1, bei der die Umfangswandung (45) der Ausnehmung (44) aus einer Vielzahl von Umfangswandungs-Abschnitten (46) zusammengesetzt ist, die durch einen vorbestimmten bestand voneinander getrennt sind, wobei die Umfangswandungs-Abschnitte (46) jeweils einen Haken (49) und einen Schenkel (48) enthalten, der durch einen vorbestimmten Abstand von einem Bodenwandungs-Teil (47) der Klemmvorrichtung (40) getrennt ist, wobei der Schenkel (48) im wesentlichen parallel zu dem Bodenwandungs-Teil (47) liegt und sich tangential von der Umfangswandung (45) erstreckt.

3. Plattenkassette nach Anspruch 1 oder 2, bei der jeder Vorsprung (42) eine Dicke hat, die geringer als diejenige der Magnetplatte (41) ist.

4. Plattenkassette nach Anspruch 3, bei der jeder Vorsprung (42) eine Dicke hat, die nicht mehr als die Hälfte derjenigen der Magnetplatte (41) beträgt.

5. Plattenkassette nach einem der vorhergehenden Ansprüche, bei der die Magnetplatte (41) eine Nut (43) enthält, in die ein Werkzeug für einen Befestigungsvorgang eingreifen kann.

6. Plattenkassette nach Anspruch 5, bei der jedem Haken (50) gegenüberliegend eine Öffnung (51) in dem Bodenwandungs-Teil (47) der Klemmvorrichtung (40) vorgesehen ist.

7. Plattenkassette (21) nach einem der vorhergehenden Ansprüche, bei der die Magnetplatte (41) eine scheibenartige Form hat.

**Revendications**

1. Cartouche de disque (21) comportant un élément de serrage (40) en matière synthétique monté pour rotation sur une moitié de cartouche de disque (23) et une plaque magnétique (41) logée dans un renfoncement (44) de l'élément de serrage (40) et qui y est fixée, la paroi périphérique (45) du renfoncement (44) étant profilée de façon à se conformer à la forme extérieure de la plaque magnétique (41), caractérisée en ce que plusieurs saillies (42) sont formées sur la plaque magnétique (41), et plusieurs moyens de crochet (50) sont formés le long de la dite paroi périphérique (45) du renfoncement (44), les saillies (42) sur la plaque magnétique (41) étant engagées de manière respective avec les moyens de crochet (50) afin de fixer la plaque magnétique (41) à l'élément de serrage (40).

2. Cartouche de disque selon la revendication 1, dans laquelle la paroi périphérique (45) du renfoncement (44) se compose de plusieurs sections de paroi périphérique (46) séparées l'une de l'autre d'une distance prédéterminée, les sections de paroi (46) comportant chacune un crochet (49) et une patte (48) séparés d'une distance prédéterminée d'une section de paroi de fond (47) de l'élément de serrage (40), la patte (48) étant sensiblement parallèle à la section de paroi de fond (47) et s'étendant tangentiellement à la paroi périphérique (45).

3. Cartouche de disque selon la revendication 1 ou 2, dans laquelle chaque saillie (42) a une épaisseur inférieure à celle de la plaque magnétique (41).

4. Cartouche de disque selon la revendication 3, dans laquelle chaque saillie (42) a une épaisseur inférieure ou égale à la moitié de celle de la plaque magnétique (41).

5. Cartouche de disque selon l'une quelconque des revendications précédentes, dans laquelle la plaque magnétique (41) comporte une rainure (43) dans laquelle peut être engagé un outil pour une opération de fixation.

6. Cartouche de disque selon la revendication 5, dans laquelle, faisant face à chaque moyen de crochet (50), une ouverture (51) est prévue dans la section de paroi de fond (47) de l'élément de serrage (40).

7. Cartouche de disque (21) selon l'une quelconque des revendications précédentes, dans laquelle la plaque magnétique (41) a une forme de disque.

# FIG. 1

# FIG.2

# FIG.3

FIG.4

# FIG.5

## FIG.6

## FIG.7

## FIG.8

# FIG.9

# FIG.12

EP 0 277 809 B1

# FIG. 10

## FIG.11